# EUROPÄISCHE PATENTANMELDUNG

(11) **EP 3 566 773 A1**
(43) Veröffentlichungstag der Anmeldung: **13.11.2019**
(21) Anmeldenummer: 18171856.0
(22) Anmeldetag: 11.05.2018
(51) Int. Cl.: B01L 3/00, G01N 35/10

(54) **ANALYSEVORRICHTUNG FÜR WÄSSRIGE MEDIEN**

(71) Anmelder: Xylem Europe GmbH, 8200 Schaffhausen (CH)
(72) Erfinder: ROSENAUER, Manfred, 86971 Peiting (DE); SCHUHMACHER, Rudolf, 82380 Peissenberg (DE); HONOLD, Frank, 82398 Polling (DE)
(74) Vertreter: DREISS Patentanwälte PartG mbB

(57) **Zusammenfassung**

Die Erfindung betrifft eine Analysevorrichtung für wässrige Medien umfassend eine Detektionseinheit sowie einen Reagenzienbehälter, der lösbar mit der Detektionseinheit verbindbar ist, zur Zugabe von Reagenzien zum wässrigen Medium, die mit den zu detektierenden Stoffen im wässrigen Medium zu Produkten reagieren, die analytisch durch die Detektionseinheit erfassbar sind, wobei der Reagenzienbehälter so ausgebildet ist, dass der Durchtritt und/oder die Abgabe von alterungsrelevanten Stoffen verhindert oder reduziert ist.

## Beschreibung

Die vorliegende Erfindung betrifft eine Analysevorrichtung für wässrige Medien umfassend eine Detektionseinheit sowie einen Reagenzienbehälter, der lösbar mit der Detektionseinheit verbindbar ist, zur Zugabe von Reagenzien zum wässrigen Medium, die mit den zu detektierenden Stoffen im wässrigen Medium zu Produkten reagieren, die analytisch durch die Detektionseinheit erfassbar sind.

Derartige Analysevorrichtungen führen chemische Analysen durch, wobei Einzelanalysen, aber auch Untersuchungen in definierten Zeitabständen, vorzugsweise automatisch, durchgeführt werden können. Hierzu wird flüssiges Medium in die Analysevorrichtung eingebracht, insbesondere über Zu- und Ableitungen der Analysevorrichtung zugeführt und wieder aus dieser abgeleitet. Dabei kann es sich um Analyseapparate handeln, die als Stand-Alone-Vorrichtung ausgebildet sind und die Detektionseinheit sowie weitere Einheiten und den Reagenzienbehälter in ein Gehäuse aufnehmen.

Derartige Vorrichtungen werden oft zur Überwachung verschiedener Medien oder Prozesse eingesetzt, beispielsweise bei verfahrenstechnischen Vorgängen in der chemischen Industrie zur Herstellung von Stoffen, aber auch zur Kontrolle von Kühlwässern sowie in wassertechnischen Anlagen, sei es bei der Aufbereitung oder dem Monitoring von Trinkwasser oder bei Kläranlagen zur Kontrolle und/oder Regelung der Vorgänge in der Abwasserreinigung. Es ist hierbei vorgesehen, dass verschiedene Stoffe oder Stoffgruppen messtechnisch, also sowohl qualitativ als auch alternativ oder zusätzlich quantitativ erfasst werden, und das Ergebnis der Messung für Beobachtungs- und/oder Regelungszwecke verwendet wird. Dabei können entsprechende Analysevorrichtungen sowohl zur Bestimmung von Einzelstoffen, wie beispielsweise Ammonium, oder von Stoffgruppen, wie beispielsweise dem Gesamtstickstoffgehalt, eingesetzt werden.

Die Analysevorrichtung umfasst dabei eine Detektionseinheit, die mit wenigstens einem Reagenzienbehälter verbunden ist. Die Reagenzien reagieren mit Stoffen in der wässrigen Lösung, um diese in eine messbare Größe zu überführen. So ist es z.B. bekannt, ortho-Phosphat, lineare Polyphosphate, zyklische Polyphosphate, organisch gebundenen Phosphor so zu ortho-Phosphat zu überführen, dass dieses dann mit einem molybdathaltigen Reagenz einen gelben Farbstoff bildet, der vermessen werden kann. Dies kann beispielsweise über optische Verfahren oder elektrochemische Prinzipien, Verfahren oder Methoden erfolgen. Die optischen Verfahren beruhen z.B. auf der Kolorimetrie oder Photometrie. Es sind jedoch auch andere bekannte Messverfahren möglich. In dem Reagenzienbehälter sind Reagenzien aber auch Standard-, Reinigungs- oder Kalibrierlösungen aufgenommen und werden hierüber an die Vorrichtung insbesondere mechanisch und bezüglich der Fluiddurchlässe angeschlossen.

Als elektrochemische Methoden können z.B. Methoden aus dem Bereich der Potentiometrie, Amperometrie oder Konduktometrie eingesetzt werden. Alternative, im Stand der Technik bekannte Verfahren sind denkbar. Für die Aufschluss- und Detektionsprozesse in der Detektionseinheit werden Reagenzien benötigt, mit denen die betreffenden beschriebenen Reaktionen durchgeführt werden können. Die Reagenzien sind dabei in Reagenzienbehältnissen bevorratet. Desweiteren werden zur Unterstützung des Betriebs Kalibrier- und/oder Reinigungslösungen benötigt, die ebenfalls in solchen Behältnissen bevorratet und bereitgestellt werden und diese hier auch als Reagenzienbehälter bezeichnet sein sollen.

Nachteilig ist dabei, dass die Gefahr besteht, dass die Reagenzien altern, was sich darin äußern kann, dass sich die Reagenzien, die in Form von Feststoffen, Flüssigkeiten oder Gasen vorliegen können, in ihrer Zusammensetzung, ihrer Art oder ihrer Konzentration ändern. Dadurch kann ihr Einsatz zeitlich begrenzt sein.

Im Stand der Technik ist es beispielsweise bekannt, zur Verlängerung der Einsatzzeit eine Kühlung der Reagenzien vorzusehen.

Sofern entsprechende Analysevorrichtungen in Laboren eingesetzt werden, kann eine Kühlung der Reagenzien in separaten Kühleinrichtungen erfolgen. Werden derartige Analysevorrichtungen jedoch nicht in Laboren, sondern in Anlagen beispielsweise der chemischen Industrie oder im Bereich von Kläranlagen eingesetzt, so bedeutet eine zusätzliche Kühlung dort einen zusätzlichen apparativen Aufwand. Darüber hinaus besteht stets ein zusätzlicher Energiebedarf der nachteilig zu bewerten ist. Ferner ist es bekannt, die Reagenzien dadurch vor Alterung zu schützen, dass sie möglichst lange separat gelagert werden und noch kein Ansetzen der Reagenzien erfolgt. Nachteilig ist hierbei, dass dann zusätzliche Serviceleistungen notwendig sind und die Reagenzien nicht in einer einsatzfähigen Form in den Behältern gelagert werden können und auch nicht als handelsfähiges Gut einsatzbereit zur Verfügung stehen.

Es ist daher Aufgabe der vorliegenden Erfindung, eine Analysevorrichtung bereitzustellen, bei der die Einsatzzeit von Reagenzien verlängert ist.

Die Aufgabe wird durch eine Analysevorrichtung mit den Merkmalen des Anspruchs 1 gelöst, bei der der mindestens eine Reagenzienbehälter so ausgebildet ist, dass der Durchtritt und/oder die Abgabe von alterungsrelevanten Stoffen verhindert oder reduziert ist. Als alterungsrelevante Stoffe können sowohl Gase, wie beispielsweise CO₂ oder Sauerstoff, die in das Reagenz hineindiffundieren, als auch Gase, die aus dem Reagenz herausdiffundieren, wie beispielsweise Wasserdampf, relevant sein. Weitere relevante einen Alterungsprozess auslösende Stoffe können beispielsweise Metalle sein, die die Zersetzung von instabilen Reagenzien befördern.

Die Analysevorrichtung ist vorzugsweise in einem Gehäuse, insbesondere als Stand-Alone-Vorrichtung ausgebildet. In der Analysevorrichtung ist ein Element zum Verbinden bzw. Anschließen und insbesondere auch Halten bzw. Aufnehmen des Reagenzienbehälters vorgesehen, um Reagenzien mit einem Medium in Kontakt zu bringen bzw. einzuleiten.

Es kann vorgesehen sein, dass bei der Bestimmung von ortho-Phosphat nach der sogenannten Blaumethode Phosphormolybdänblau eingesetzt wird. Zur Erzeugung dieses Farbstoffs wird ein Reduktionsmittel benötigt. Sofern Sauerstoff in den Reagenzienbehälter eintritt, sei es direkt durch eine Öffnung, die beispielsweise zur Entnahme des Reagenz mittels eines Schlauches oder ähnlichem dient, oder durch die Diffusion durch die Behälterwand, wird das Reduktionsmittel im Laufe der Zeit deaktiviert, das hier als Reagenz dient. Im Gegenzug kann der Austritt von Wasserdampf zu einer Konzentrationsveränderung führen, wenn als Lösungsmittel Wasser eingesetzt wurde und dieses über den Dampfdruck in Gasform über die Behälterwand nach außen diffundiert. Der Anteil am Reagenziengemisch wird daher vermindert und die Konzentration der anderen Reagenzieninhaltsstoffe erhöht. Eine alternative Möglichkeit einer Alterung ist beispielsweise im Zutritt von CO₂, wodurch eine pH-Änderung hervorgerufen werden kann. Die Einstellung des richtigen pH-Wertes stellt dabei ebenfalls ein wichtiges Merkmal für eine geringe Alterung der Reagenzien dar.

Der Begriff Reagenzien soll hier vorzugsweise weit zu verstehen sein und auch Standard-, Kalibrier- oder Reinigungslösungen oder ähnliches umfassen, die über entsprechende Behältnisse in der Vorrichtung bereitgestellt und angeschlossen werden. Standardlösungen sind dabei Lösungen mit definiertem Gehalt an den zu messenden Stoffen, die zum Abgleich der Analysevorrichtung eingesetzt werden können. Die vorgenannten Lösungen werden in gleicher Weise in der Analysevorrichtung eingesetzt und insbesondere ebenfalls in dem jeweiligen Behälter an die Vorrichtung angeschlossen.

Weiter alternative Maßnahmen können die separate Lagerung von Reagenzienbestandteilen sein.

Nach einer ersten Ausgestaltung kann vorgesehen sein, dass der Reagenzienbehälter, der ein oder mehrere Reagenzien enthalten kann, als Kartusche oder Beutel ausgebildet ist. Er stellt dabei in der Analysevorrichtung einen auswechselbaren Bestandteil dar. So kann der Verwender der Analysevorrichtung die Reagenzien einsatzfertig im Beutel oder in der Kartusche erwerben und diese unmittelbar an seine Analysevorrichtung anschließen, die hierfür vorgesehene Verbindungselemente bzw. Entnahmeeinrichtungen sowohl mechanischer Art als auch für den Stoffstrom aufweist. Dabei kann vorgesehen sein, dass eine Aufnahmeeinheit für den Reagenzienbehälter vorgesehen ist, die eine mechanische Halterung zugleich mit einer strömungstechnischen Verbindung realisiert. Die mechanische Halterung kann insbesondere kraft- oder formschlüssig sein, insbesondere eine Rastverbindung, mittels der der Reagenzienbehälter gehalten ist.

Die Reagenzien liegen dabei im Reagenzienbehälter gebrauchsfertig vor. Besonders bevorzugt besteht der Reagenzienbehälter aus einem Kunststofffolienmaterial bzw. umfasst diese, wobei das Kunststofffolienmaterial vorzugsweise mehrlagig aufgebaut ist. So sind beispielsweise dreilagige Verbundfolien denkbar, die entweder ausschließlich aus Kunststoffmaterialien bestehen, oder eine metallisierte Schicht aufweisen. Diese kann in üblichen Verfahren, wie Sputtern etc., aufgebracht sein. Denkbar ist beispielsweise eine Aluverbundfolie aus PET/Alu und PE, wobei die Aluminiumschicht zwischen den beiden Kunststofflagen eingebettet ist. Eine solche Schicht kann eine hohe Reißfestigkeit aufweisen. Denkbar sind jedoch auch weitere Metalle, wie Gold oder Kombinationen verschiedener Metalle, sowie verschiedene Kunststoffe, wie Polyamide, Polyethylen und Polyethylenterephthalat. Die Schichtenabfolge kann dabei variieren und insbesondere kann auch, wenn auch weniger bevorzugt, die metallisierte Schicht als Außenschicht vorgesehen sein. Ebenso sind metallfreie Folien denkbar und Gegenstand eines bevorzugten Ausführungsbeispiels. Nach einem Ausführungsbeispiel können jedoch auch einlagige Folienmaterialien bevorzugt sein, wobei insbesondere PET nur eine geringe Permeabilität für CO₂ oder Polyamid für Sauerstoff aufweisen. Ist die Außenseite des Kunststofffolienmaterials frei von metallischer Beschichtung, gleichzeitig jedoch so gestaltet, dass Migrationsvorgänge des Metalls verhindert oder deutlich reduziert sind, oder ist ohnehin kein Metall im Reagenzienbehältnis vorgesehen, kann dies bei dem Einsatz bestimmter Reagenzien Vorteile bieten. Beispielsweise bei der Verwendung einer Berthelot-Reaktion zur Bestimmung von Ammoniumgehalten kann ein Reagenz eingesetzt werden, das Chlor liefert. Hierzu wird üblicherweise Hypochlorit eingesetzt, das jedoch instabil ist und zerfallen kann. Ein Beispiel für einen derartigen Vorgang ist die Gleichung

2 OCl⁻ → 2 Cl⁻ + O₂.

Derartige Zersetzungen werden beispielsweise durch Verunreinigungen oder geringe Konzentrationen an Metallen, Metalloxiden sowie auch anderen Stoffen katalysiert.

Beispielsweise wird die Zersetzung von Hypochlorit durch Eisen, Nickel oder deren Oxide befördert. Dadurch, dass nicht nur die Reagenzien, sondern auch die Reagenzienbehälter frei von derartigen Stoffen sind und eine Migration solcher Stoffe verhindert wird, kann die Alterung durch die Zersetzung reduziert oder gar verhindert werden.

Besonders bevorzugt ist es dabei, wenn auch weitere Elemente, wie Entnahmeeinrichtungen, Absperreinrichtungen, eingesetzt werden. Besonders bevorzugt ist es dabei auch, wenn die Herstellungsvorrichtungen für die Behälter und auch für die Lösungen und Reagenzien frei von derartigen die Zersetzung befördernden Stoffen sind, so dass auch keine Kleinstspuren in das Reagenz hineingetragen werden.

Dabei ist besonders bevorzugt, dass, sofern eine metallische Beschichtung vorgesehen ist, diese gasdicht oder zumindest gasdurchtrittsvermindernd ausgebildet ist. Dabei soll unter "gasdicht" eine Verhinderung des Gasdurchtritts um 80%, insbesondere um 90% und weiter insbesondere um 95% gegenüber dem gleichen Aufbau ohne metallische Beschichtung verstanden werden. Unter "gasdurchtrittsverhindernd" soll eine Reduktion um mindestens 40%, bevorzugt um mindestens 50%, weiter bevorzugt um mindestens 60% und weiter bevorzugt um mindestens 70% gegenüber einer Gestaltung des Reagenzienbehälters ohne diese Beschichtung verstanden werden.

Bei der Detektionsvorrichtung kann es sich insbesondere um eine optische und/oder elektrochemische handeln. Dabei kommen die im Stand der Technik bekannten Verfahren, wie Kolorimetrie oder Photometrie sowie Potentiometrie, Amperometrie oder Konduktometrie, sowie weitere bekannte Verfahren in Frage. Darüber hinaus kann zusätzlich noch vorgesehen sein, dass die Analysevorrichtung und insbesondere die Detektionsvorrichtung und weiter insbesondere der Reagenzienbehälter eine Kühlung aufweisen. Durch eine zusätzliche Kühlung können sowohl eine Zersetzungsrate als auch eine Diffusionsrate und die Reaktionsgeschwindigkeit einer Oxidation herabgesetzt werden.

Ferner ist es ebenfalls denkbar, verschiedene Reagenzien getrennt voneinander in entsprechenden Reagenzienbehältnissen vorzusehen und diese erst in einer zusätzlichen Reaktionskammer, die den Reagenzienbehältern nachgeschaltet ist, zu mischen, und erst danach das Reagenz mit dem wässrigen Medium zu kontaktieren. Alternativ kann das wässrige Medium auch in der Reaktionskammer zugemischt werden, wobei die Reihenfolge auch vertauschbar ist.

Weitere Vorteile und Merkmale der Erfindung ergeben sich aus den übrigen Anmeldungsunterlagen, insbesondere der nachfolgenden Figurenbeschreibung.

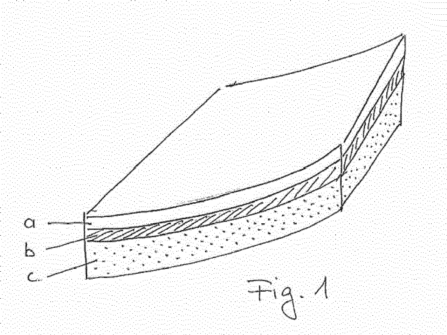

Dabei zeigt die einzige Figur einen Reagenzienbehälter, der im vorliegenden Fall aus einem mehrlagigen Kunststofffolienmaterial gebildet ist, das beispielsweise in einem Kunststoffblasverfahren hergestellt wurde. Ferner sind auch sämtliche weiteren üblichen Verfahren zur Herstellung mehrlagiger Kunststofffolienlaminate und insbesondere zur Herstellung von Behältnissen aus solchen für die vorliegende Erfindung einsetzbar. Die Wandung des Reagenzienbehältnisses besteht hierbei aus einem dreilagigen Aufbau, wobei die beiden Außenseiten durch einen Kunststoff 1 und einen Kunststoff 2 gebildet werden, hier beispielsweise PET und PE, wobei die PE-Lage zum Behälterinneren gerichtet ist und auf eine der Lagen, PE oder PET zuvor eine Aluminiumschicht aufgebracht wurde. Durch die vollflächige Metallisierung wird der Durchtritt von Gasen durch die Behälterwandung verhindert oder zumindest signifikant reduziert, wodurch die Alterung der in dem Behälter befindlichen Reagenzien so beeinflusst werden kann, dass sie verlangsamt oder reduziert wird.

## Patentansprüche

1. Analysevorrichtung für wässrige Medien umfassend eine Detektionseinheit sowie wenigstens einen Reagenzienbehälter für Reagenzien, Standard- oder Reinigungslösungen, der lösbar mit der Detektionseinheit verbindbar ist, zur Zugabe von Reagenzien, Standard- oder Reinigungslösungen zum wässrigen Medium, die mit den zu detektierenden Stoffen im wässrigen Medium zu Produkten reagieren, die analytisch durch die Detektionseinheit erfassbar sind, **dadurch gekennzeichnet, dass** der Reagenzienbehälter so ausgebildet ist, dass der Durchtritt und/oder die Abgabe von alterungsrelevanten Stoffen verhindert oder reduziert ist.

2. Analysevorrichtung nach Anspruch 1, **dadurch gekennzeichnet, dass** der Reagenzienbehälter als Kartusche oder Beutel ausgebildet ist.

3. Analysenvorrichtung nach Anspruch 1 oder 2, **dadurch gekennzeichnet, dass** der Reagenzienbehälter ein Kunststofffolienmaterial umfasst, das insbesondere mehrlagig ausgebildet ist.

4. Analysenvorrichtung nach Anspruch 3, **dadurch gekennzeichnet, dass** eine der Kunststofflagen eine metallische Beschichtung aufweist und insbesondere die beiden äußeren Seiten des Kunststofffolienmaterials frei von metallischer Beschichtung sind.

5. Analysenvorrichtung nach Anspruch 3 oder 4, **dadurch gekennzeichnet, dass** die metallische Beschichtung gasdicht ist.

6. Analysenvorrichtung nach einem der vorherigen Ansprüche, **dadurch gekennzeichnet, dass** die Detektionsvorrichtung eine optische und/oder elektrochemische ist.

7. Analysenvorrichtung nach einem der vorherigen Ansprüche, **dadurch gekennzeichnet, dass** die Analysenvorrichtung und insbesondere die Detektionsvorrichtung und insbesondere der Reagenzienbehälter eine Kühlung aufweist.

8. Analysevorrichtung nach einem der vorherigen Ansprüche, **dadurch gekennzeichnet, dass** die Analysevorrichtung eine Aufnahmeeinheit zum lösbaren mechanischen und strömungstechnischen Verbinden des Reagenzienbehälters aufweist.
